# EUROPEAN PATENT APPLICATION

(11) **EP 0 979 607 A1**
(43) Date of publication of application: **16.02.2000**
(21) Application number: 99305058.2
(22) Date of filing: 28.06.1999
(51) Int. Cl.: A01N 59/06, C08K 3/22, C08K 3/26

(54) **Inorganic antibacterial-mildewproofing agent, antibacterial resin composition and antibacterial resinous article using the agent**

(30) Priority: 29.06.1998 JP 18281598
(71) Applicant: Maeda, Nobushige, Tokyo 177-0042 (JP); Mochigase Electric Technical Co., Ltd., Yazu-gun, Tottori-ken 689-1201 (JP); Sumiyoshi Kinzoku Co., Ltd., Tondabayashi-shi, Osaka 584-0022 (JP)
(72) Inventor: Maeda, Nobushige, Nerima-ku, Tokyo 177-0042 (JP)
(74) Representative: Rees, David Christopher

(57) **Abstract**

An inorganic antibacterial-mildewproofing agent comprises calcined dolomite as the active ingredient. The calcined dolomite has magnesium oxide and calcium carbonate or magnesium oxide and calcium oxide as main components.

A resin composition containing 2,5 to 20% of the inorganic antibacterial agent and 0,05 to 1,5% of a good solvent for the resin retains a high antibacterial activity. The solvent has a solubility parameter nearly equal to the solubility parameter of the resin.

## Description

This invention relates to a novel inorganic antibacterial-mildewproofing agent, an antibacterial resin composition, an antibacterial resinous article using the agent, and a method for the producing the composition. More particularly, this invention relates to an inorganic antibacterial-mildewproofing agent which is capable of thoroughly manifesting the excellent antibacterial activity on the resinous article using any kinds of the base resin without impairing in any degree the characteristic of the antibacterial-mildewproofing agent, an antibacterial resin composition and an antibacterial resinous article using the agent, and a method for the producing the composition.

For the processing of a resin, a plastic and so on processing ingredients and additives like plasticizer, antioxidant, filler, antistatic agent etc. are necessary and indispensable. For parts of all the species of a resin composition, the antibacterial-mildewproofing agent is used as one of the essential additives. This agent, depending on the kind of use, has become an essential component for any kinds of base resins. Today, the infliction of harm on a resinous article by a microorganism is common sense. Often, even resins other than such resins as soft vinyl chloride resin and urethane resin which are susceptible of the harm require any kinds of antibacterial treatments for preventing the harm.

The antibacterial-mildewproofing agents offered at present for use in the resin composition or the resinous article may be broadly sorted under the two types, i.e. the organic type and the inorganic type.

The organic antibacterial-mildewproofing agents currently in use include those of the pharmaceutical preparations known heretofore as fungicides which is capable of withstanding the heat applied thereto during the processing of a resin composition or a resinous article and so stable as to keep the quality of the agent intact for a long time in the resinous article. Typical of these organic antibacterial-mildewproofing agents are 2-(4-thiazolyl)benzimidazole, N-(fluorodichloromethylthio)-phthalimide, 2,3,5,6-cytochloro-4-(methylsulfonyl)-pyridine, 10,10'-oxybisphenoxy arsine, trimethoxysylyl-propyloctadecyl ammonium chloride, 2-n-octyl-4-isothiazolin-3-on, zinc bis(2-pyridylthio-1-oxide) etc.

Since these organic antibacterial-mildewproofing agents are enabled to manifest their immediate effects by diffusing themselves into the environment through volatilization and liquidation from the resinous article including the agent, however, it may well be concluded that their duration of efficiency are relatively short and the influences on human bodies are relatively strong. Besides such faults, these organic antibacterial-mildewproofing agents encounter difficulties in ensuring safety of use because some of them are suspected to be teratogenic and some of them, when discarded after use, possess toxicity. Further, in the applications in which such organic antibacterial-mildewproofing agents are required to be safe at all the steps of processing, use, and discarding, particularly the endurance of safety against the potential toxicity of the agents themselves, the toxicity manifested when the agents are gasified, or the toxicity manifested by the products of thermal decomposition thereof poses difficulties. Some of the organic antibacterial-mildewproofing agents, in the form of a single article, exhibit heat resistance at the processing temperature of a resin composition (predominantly not lower than 200 °C or even close to 300°C and occasionally not higher than 200 °C as in the case of soft vinyl chloride resin) but, in the form of an additive used in a resin composition or a resin article, yield to decomposition even at a lower temperature to the extent of compelling the resin to suffer from the phenomenon of after yellowing or bringing adverse effects on the molding of resin composition. To make the matter worse, these organic antibacterial-mildewproofing agents are relatively expensive.

Almost all the inorganic antibacterial-mildewproofing agents are metal substituted antibacterial-mildewproofing agents which have such antibacterial metals as silver, copper, and zinc deposited on inorganic ion exchangers or porous carriers such as zirconium phosphate, zeolite, hydroxy apatite, silica alumina, and silica gel. Among these metal substituted antibacterial agents, the silver inorganic antibacterial agents which particularly excel in both effectiveness and safety generally find popular acceptance. Though these inorganic antibacterial-mildewproofing agents, unlike the organic antibacterial-mildewproofing agents, are incapable of entailing the various problems enumerated above, they are at a disadvantage in suffering the metal ions thereof which are their effective components catalytically degrade the base resin. Especially, the silver inorganic antibacterial agent is deficient in lightfastness as evinced by the fact that the metal silver contained therein tends to be varied and discolored particularly by light (ultraviolet light). Further, these inorganic antibacterial-mildewproofing agents are relatively expensive because they require to use an inorganic ion exchanger or porous substance as a carrier and consequently entail an addition to the number of steps of process. Further, the conventional inorganic antibacterial-mildewproofing agents induce only sparingly the phenomena of volatilization and liquation proper to the organic antibacterial-mildewproofing agents and do not manifest their effects until the agents dispersed in the surface of the products of contact bacteria and mildews. It has been experimentally that an effort to mix such a known inorganic antibacterial-mildewproofing agent with a base resin (or, in the formation of an antibacterial coating on the surface of resinous article, the resinous component of a coating material as the raw material for coating) at a stated ratio and then process the resultant mixture fails to manufacture a resinous article having a sufficient antibacterial property and further that even an effort to mix an inorganic antibacterial-mildewproofing agent containing a complex ceramic having a novel and extremely high antibacterial property at a stated ratio with a base resin and then process the resultant mixture fails to manufacture a resinous article having an antibacterial property superior to the conventional.

An object of this invention, therefore, is to solve the technical problems confronting the conventional organic and inorganic antibacterial-mildewproofing agents and ultimately provide a novel inorganic antibacterial-mildewproofing agent.

Another object of this invention is to solve the technical problems confronting the conventional organic and inorganic antibacterial-mildewproofing agents and ultimately provide an antibacterial resin composition (inclusive of the resinous article formed by using an inorganic antibacterial-mildewproofing agent) having an antibacterial property substantially equal to that of an inorganic antibacterial-mildewproofing agent excelling in antibacterial activity without causing a great degradation, preferably even only a sparing degradation, to the antibacterial activity and a method for the producing the resin composition.

The present inventors, after continuing a diligent study concerning inorganic antibacterial-mildewproofing agents and antibacterial resin composition techniques, have discovered that an antibacterial resin composition capable of retaining a heretofore unattainable high antibacterial activity can be realized by adding a solvent ( a solvent having a solubility parameter (SP) nearly equal to the SP of a base resin) to the base resin of the antibacterial resin composition. This invention has been perfected as a result.

The antibacterial resinous article of this invention is characterized by the fact that the antibacterial activity (X) of the inorganic antibacterial-mildewproofing agent itself and the antibacterial activity (Y) of the antibacterial resinous article using the inorganic antibacterial-mildewproofing agent satisfies a correlation of Y ≧ 0.6X. The antibacterial resinous article of this quality can retain the antibacterial effect possessed by the inorganic antibacterial-mildewproofing agent without entailing any serious impairment and manifest a high antibacterial activity. The term "antibacterial resinous article" as used herein means a resinous article which, owing to the incorporation therein of a chemical agent (antibacterial-mildewproofing agent) instead of resorting to such temporary effect as irradiation with ultraviolet light or gaseous disinfection, acquires an ability to retain the effect of repressing bacteria and mildews for a considerable length of time.

The antibacterial activities (X) and (Y) as used in this invention represent the magnitudes that are determined by the methods qualified by Nippon Bokin Bobai Gakkai (Japan Society for Protection against Bacteria and Mildews). The antibacterial activity relative to bacteria is determined (1) by the shake method concerning an inorganic antibacterial-mildewproofing agent in the form of powder and a resin in the form of powder or (2) by the pressure method concerning various processed resinous articles (having a definite shape). The antibacterial activity relative to mildews is determined by the method specified in Japanese Industrial Standard (JIS) Z2911. These methods are summarized below.

Shake method: This method of evaluating the antibacterial activity can be applied to resinous articles in the form of powder. It attains the evaluation by placing a sample (an inorganic antibacterial-mildewproofing agent and a resinous article in the form of powder) and a given bacterium together in a phosphate buffer, shaking the buffer containing them for a stated length of time, and then taking count of numbers of surviving bacterium. Thus, this method confirms the effect of the sample by shaking the sample and the bacterium dispersed together in the aqueous buffer solution thereby inducing forced contact thereof.

Pressure method: This method of evaluating the antibacterial activity can be applied to processed products having a definite shape (various processed products of resin answer this description). It attains the evaluation by applying a suitable amount (0.050 ml, for example) of a given bacterium suspended in an aqueous 1% peptone solution to a sample products of a stated size (25 × 25 mm, for example) (equivalent to inoculation of 1.0 × 10⁶ cells per sample sheet), then placing a sterilized polyethylene film (30 × 30 mm) in intimate contact with the sample, allowing the superposed layers to stand at suitable temperature (30 °C, for example) and humidity (moistened state) for 24 hours, then recovering the bacterium from the superposed layers with a suitable amount (10 ml, for example) of a SCDLP culture medium, suitably diluting the recovered bacterium, and taking count of the numbers of surviving bacterium by the plate dilution method (using a SCDLP agar culture medium and performing culture at 32°C for 48 hours).

Method according to JIS Z2911, this method evaluates the effect of preventing growth of mildew in accordance with JIS Z2911 specifying a test for resistance to the action of mildew. This method of evaluating the antibacterial activity can be applied to the inorganic antibacterial-mildewproofing agent and various resinous articles, processing products (irrespective of shape) according to the present invention. It attains the evaluation by allowing an inorganic antibacterial-mildewproofing agent of this invention or a varying resinous article to stand at rest as a sample on agar culture medium, inoculating a spore suspension onto the sample throughout the entire surface, culturing the spore at suitable temperature and humidity for three to four weeks, observing the growth of mildew on the sample visually or with the aid of a microscope, and rating the result of observation.

In this invention, the antibacterial activity (X) of the inorganic antibacterial-mildewproofing agent itself and the antibacterial activity (Y) of the resinous article using the inorganic antibacterial-mildewproofing agent is required to have a correlation satisfying Y ≧ 0.6X, preferably Y ≧ 0.75X, and more preferably Y ≧ 0.90X. If the correlation is Y < 0.6X, the antibacterial effect possessed by the conventional inorganic antibacterial·mildewproofing agent as a simple substance will be greatly impaired, the antibacterial-effect to be manifested will be on a par with the antibacterial effect attainable by the antibacterial resinous article using the conventional inorganic antibacterial-mildewproofing agent, and the manifestation of an excellent antibacterial activity as compared with the conventional antibacterial resinous article will be unexpectable. When the correlation of Y ≧ 0.75X, and preferably, Y ≧ 0.90X, are satisfied, the antibacterial activity which is possessed by the inorganic antibacterial-mildewproofing agent itself is impaired only sparingly and the antibacterial resinous article veritably excellent in quality can be realized. Since this antibacterial resinous article is capable of retaining the antibacterial activity exceeding a fixed level for a long time, it can be efficiently used in a wide range of applications including sanitary articles strongly yearning for a antibacterial activity and household interior materials such as wall paper and flooring and building materials such as sealing agent which invariably demand protracted service.

It is only fair to conclude that the antibacterial resinous article according to this invention particularly requires to possess an antibacterial activity substantially equal to the antibacterial activity possessed by the inorganic antibacterial-mildewproofing agent mentioned above. When the value (Y) obtained by quantifying the antibacterial activity of a resinous article containing the inorganic antibacterial-mildewproofing agent mentioned above for permitting objective evaluation satisfies the more preferable range, Y ≧ 0.90X, relative to the value (X) obtained by quantifying the antibacterial activity of the inorganic antibacterial-mildewproofing agent for permitting objective evaluation, the two substances under discussion may well be concluded as substantially equal in terms of antibacterial activity. This invention, however, does not particularly need to use the numerical values found by the methods of determination mentioned above as the standards. When the value (X) obtained by quantifying the antibacterial activity of the inorganic antibacterial-mildewproofing agent as a simple substance for permitting objective evaluation and the value (Y) obtained by quantifying the antibacterial activity of a resinous article containing the inorganic antibacterial-mildewproofing agent mentioned above for permitting objective evaluation are to be given in future by the other methods of determination such as those qualified by Japan Society for Protection against Bacteria and Mildews, for example, and when the given samples satisfy the relation, Y ≧ 0.90, on the basis of these numerical values, it is fair to conclude that "the antibacterial resinous article possesses an antibacterial activity which is substantially on a par with the antibacterial activity possessed by the inorganic antibacterial-mildewproofing agent."

The antibacterial resin composition comprises the inorganic antibacterial-mildewproofing agent mentioned above and a good solvent for the base resin, wherein the amount of the inorganic antibacterial-mildewproofing agent to be incorporated is in the range of 2.5 to 20 wt.% based on the weight of the base resin and the amount of the good solvent to be incorporated is in the range of 0.05 to 1.5 wt.% based on the weight of the base resin.

This invention does not need to discriminate particularly the base resin for use in the antibacterial resin composition on any account. Any of the resins, which have been heretofore used as base resins for known plastics can be used. In the contex of the present invention, the term "resin" relate to any macromolecular compounds capable of dissolving in solvent, mixing with solvent or absorbing solvent and do not include polyamide DNA and RNA. As typical examples of resins (macromolecular compounds), elastomer such as natural rubber, polysulfide (thiokol rubber) and butyl rubber, an halogen including resin such as polytetrachloroethylene, polyvinyl chloroacetate and polyvinyl chloride, polymer such as polydimethylsiloxane, polypropylene, polyethylene, hydrogenated polybutadiene, polybutadiene/styrene (85/15, 75/25, 60/40), polyisobutylene, polybutadiene, polybutyl acrylate, polyethylene hexyl methacrylate, polyethoxy methyl methacrylate, polypropyl acrylate, polystyrene, polystyrene divinyl benzene, polymethyl methacrylate, neoprene, polybutadiene/acrylonitrile (75/25), polyvinyl acetate, polyethylene acrylate, polymethyl acrylate, epoxy resin, polyurethane, ethyl cellulose, polyethylene glycol terephthalate, cellulose diacetate, cellulose dinitrate, polymethylen-oxide, phenol resin, polyvinylidene chloride, nylons, polymethacrylonitrile, and polyacrylonitrile may be cited. The resinous materials enumerated above as usable base resin for the resin composition may be used either singly or in the form of a combination or a copolymer of two or more members.

The proportion of the base resin is 20 to 97.5 wt.% based on the weight of the resin composition, preferable 30 to 95 wt.%, more preferable 40 to 90 wt.%.

The inorganic antibacterial-mildewproofing agent to be used for the antibacterial resin composition of this invention does not need to be discriminate particularly on any account. The metal type inorganic materials and nonmetal inorganic materials which possess an antibacterial activity can be used invariably. They may be used as suitably combined. The metal inorganic materials having an antibacterial activity may be used in the form of oxides (such as, for example, zinc oxide and titanium dioxide) besides various inorganic antibacterial·mildewproofing agents known heretofore. The nonmetal inorganic materials having an antibacterial activity include complex ceramics which possess antibacterial activities [specifically, complex ceramics which is obtainable by using minute grains of magnesia (preferably having a particle diameter in the range of 1 nm to 2 µm) as a base material and minute grains (preferably having a particle diameter in the range of 1 nm to 2 µm) of at least one simple ceramic selected from the group consisting of γ-alumina, quartizite, amphibole, serpentine, zinc oxide, zeolite, and Oya tuff stone pumice as a mixing material, and mixing 35 - 65 wt.% based on the weight of the complex ceramics of the base material with 35 - 65 wt.% based on the weight of the complex ceramics of the base resin], and nonmetal inorganic materials such as magnesia (MgO), γ-alumina, amphibole, and serpentine which are used as raw materials for the complex ceramics mentioned above and which possess an antibacterial activity, for example. Besides the examples cited above, the novel nonmetal inorganic antibacterial-mildewproofing agents separately invented by the present inventors, i.e. calcined dolomite having magnesium oxide and calcium carbonate as main components thereof, calcined dolomite having magnesium oxide and calcium oxide as main components thereof, dolomite not calcined, and mixed compositions containing them may be regarded as suitable antibacterial nonmetal inorganic materials because they invariably possess a deodorizing effect in addition to an antibacterial-mildewproofing property. As the inorganic antibacterial-mildewproofing agent, the metal inorganic materials and nonmetal inorganic materials mentioned above may be used either singly or in the form of a combination of two or more members. The expression "dolomite not calcined" as used herein refers to a complex carbonate, CaMg(CO₃)₂, which is formed of calcium and magnesium and which is otherwise called either a HAKUUNNSEKI or KUKAISEKI in Japan or a rock having the complex thereof as a main component. When this dolomite is heated to 700 - 800 °C, the MgCO₃ component thereof is decomposed with elimination of CO₂ and converted into a calcined material of calcium carbonate (CaCO₃) and magnesium oxide (MgO) (hereinafter referred to simply as "calcined dolomite A"). When this dolomite is further heated to 900 - 950 °C, the CaCO₃ is decomposed with elimination of CO₂ and converted into a calcine of calcium oxide (CaO) and magnesium oxide (MgO) (hereinafter referred to simply as "calcined dolomite B"). The expression "calcined dolomite having magnesium oxide and calcium carbonate as main components thereof," therefore, refers to the "calcined dolomite A" mentioned above and the expression "calcined dolomite having magnesium oxide and calcium oxide" refers to the "calcined dolomite B" mentioned above. Among the inorganic antibacterial-mildewproofing agents mentioned above, those containing a calcined dolomite B which is quite inexpensive, excellent in safety, incapable of catalytically deteriorating the base resin of plastic, and excellent in resistance to light and resistance to heat as well particularly prove commendable. Especially, the composition containing the calcined dolomite B may be complexed by a suitable method to produce a ceramic (hereinafter referred to simply as an "antibacterial complex ceramic"). The production of this antibacterial complex ceramic may be attained by a method which comprises feeding a composition containing a dolomite in a suitable ratio sequentially to a mixing device and a pulverizing device up to several repetitions, adjusting the composition to a prescribed particle size and mixing it uniformly, and thereafter calcining the composition at a temperature of not lower than 900 °C. It may be otherwise accomplished by a method which comprises calcining a dolomite at a temperature of not lower than 900°C, preferably in the range of 900 to 1200 °C, more preferably 1000 to 1100°C thereby converting it into a calcined dolomite B, mixing the calcined dolomite B with other component (the initial dolomite is calcined preparatorily at a temperature in the range of 700 - 800°C when the calcined dolomite A is contained in the other component) in a suitable ratio, feeding the resultant calcine sequentially to a mixing device and a pulverizing device up to several repetitions, adjusting the produced composition to a prescribed particle size and mixing it uniformly, and thereafter calcining the composition at a temperature in the range of 200 - 500°C.

The inorganic antibacterial-mildewproofing agent may be contained the calcined dolomite in the range of 25 to 100 wt.% , preferable in the range of 30 to 90 et.%, more preferable in the range of 40 to 70 wt.% based on the weight of the agent as main component, and MgO in the range of 0 to 50 wt.% based on the weight of the agent, SiO in the range of 0 to 25 wt.% based on the weight of the agent, ZnO in the range of 0 to 50 wt.% based on the weight of the agent and TiO in the range of 0 to 50 wt.% based on the weight of the agent may be use as other components respectively.

The inorganic antibacterial-mildewproofing agent mentioned above is expected to have a particle diameter in the range of 5 nm to 15 µm, preferably in the range of 5 nm to 10 µm, and more preferably in the range of 5 nm to 1 µm. The inorganic antibacterial-mildewproofing agent of a fixed amount has the surface area thereof decrease in accordance as the particle diameter thereof increases. The inorganic antibacterial-mildewproofing agent does not manifest the antibacterial effect thereof until the inorganic antibacterial-mildewproofing agent dispersed as on the surface of plastic contacts bacteria and mildews. If the particle diameter of the inorganic antibacterial-mildewproofing agent exceeds 15 µm, the excess will be at a disadvantage in not only causing the particles to acquire an improper surface area but also lowering the strength of the resinous article. On the other hand, if the particle diameter of the inorganic antibacterial-mildewproofing agent lowers 5 nm, it will introduce a disadvantage lowering the strength of the resinous article due to exceeding volume of the agent to be used.

Properly, the antibacterial activity (X) of the inorganic antibacterial-mildewproofing agent mentioned above is not less than 85%, preferably not less than 95%, and more preferably not less than 97%, for both Escherichia coli and staphylococcus. If the inorganic antibacterial-mildewproofing agent happens to have an antibacterial activity (X) of less than 85% even for either Escherichia coli or staphylococcus, the shortage will be at a disadvantage in preventing the resinous article from acquiring an antibacterial activity exceeding the antibacterial effect possessed by the inorganic antibacterial·mildewproofing agent itself and making it difficult to provide a resinous article having a high antibacterial activity exceeding a certain level. The Escherichia coli and the staphylococcus are selected herein because this selection is customary. The reason for this selection is that they representatively represent Bacillus and Micrococcus. The convincing active oxygen theory which has been offered with a view to accounting for the antibacterial action of the inorganic antibacterial-mildewproofing agent ascribes this antibacterial action to the mechanism that the active oxygen generated by the antibacterial·mildewproofing agent on exposure to light in the presence of oxygen or water kills all the bacteria by oxidation. In accordance with this theory, it suffices to elicit proof relative to one or two typical species of bacteria and mildews.

The content of the inorganic antibacterial-mildewproofing agent is properly expected to fall in the range of 2.5 - 20 wt. %, preferably in the range of 3.5-7.5 wt. %, and more preferably in the range of 3.5- 5.0 wt. %, based on the amount of the base resin of the antibacterial resin composition. If the content of the inorganic antibacterial-mildewproofing agent is less than 2.5 wt. % based on the amount of the base resin of the antibacterial resin composition mentioned above, the shortage will be at a disadvantage in making it difficult for the expected antibacterial effect to be fully manifested. Conversely, if the content exceeds 20 wt. %, the excess will be at a disadvantage in lowering the strength of the resinous article made of the antibacterial resin composition.

The antibacterial resin composition of this invention does not particularly discriminate the formulating ingredient and the additive which are usable therein in addition to the inorganic antibacterial-mildewproofing agent. The formulating ingredients and the additives heretofore known as usable for the resin such as, for example, monomer for diluting, plasticizer, antioxidant, filler, and antistatic agent may be suitably used. Such inorganic materials as deodorant and repellent which promise development of new uses of added value are acceptable as additives, depending on the purpose of use. Of these additives, such organic materials as deodorant and repellent may be preparatory only incorporated as formulating ingredients in the inorganic antibacterial·mildewproofing agent.

Incidentally, the present invention does not particularly discriminate the antibacterial resinous article on account of the form of use. The antibacterial resinous article may be applied to all the forms of use. As concrete examples of the form of use, film materials fit for wrapping food, shaped materials (plates, bars, and other molded materials having shapes fit for end uses) which are fit as parts to be used in such portions of daily necessaries like food containers, cutting board, kitchen utensils, and bathroom articles and electric products like refrigerator, washing machine, portable telephone terminal, water purifier, and air conditioner which are required to possess an antibacterial activity, shaped materials (mainly film materials, thin plate materials, and bars) which are composite materials of the antibacterial resinous article of this invention with other materials and which are fit for household interior materials like wall paper and flooring material, building materials like a ceiling material, and water-treating materials like various tanks and pipes, fibrous materials fit for textile products like stockings, carpets, and bedclothes, and all other conceivable forms may be cited.

The antibacterial resinous article of this invention mentioned above can be manufactured by the following method for production. Specifically, the antibacterial resinous article of this invention may be produced by (1) a method which is characterized by incorporating additives including a good solvent for the base resin and the inorganic antibacterial-mildewproofing agent, mixing the resultant mixture and processing the antibacterial resin composition to be obtained or (2) a method which is characterized by preparing a coating material containing a good solvent for the resinous component of the coating material and an inorganic antibacterial-mildewproofing agent and applying the coating material to at least the surface portion of resinous article thereby forming a coating or a superposed part having an antibacterial activity on the resinous article. According to the method of (1) mentioned above, uniform dispersion of the inorganic antibacterial-mildewproofing agent throughout the entire volume of the base resin may be attained by preparing a master batch which has the inorganic antibacterial-mildewproofing agent and other additives and a good solvent for the base resin incorporated in high concentrations in part of the base resin and diluting the master batch with the remaining base resin. The uniform dispersion may be otherwise attained by preparing a master batch which has the inorganic antibacterial-mildewproofing agent and other additives incorporated in high concentrations in part of the base resin and adding to the master batch a good solvent for the base resin during the subsequent dilution of the master batch with the remaining base resin. The time of adding the good solvent for the resinous component of the coating material and the time of adding the coating material containing the inorganic antibacterial·mildewproofing agent do not need to be particularly restricted. The optimum mixing method may be selected from among various known methods.

The method of (1) mentioned above is particularly suitable for the purpose of enabling the resinous article to acquire an antibacterial activity throughout the entire volume thereof. It constitutes itself a means which enables the resin article to acquire the antibacterial activity at the same time that it is formed in a prescribed shape. In contrast to the conventional method of production which consists in either having additives including an inorganic antibacterial-mildewproofing agent incorporated in the base resin of resin composition prior to processing the composition simply, or having formed on the surface part of plastic an antibacterial coating by using a coating material containing an inorganic antibacterial-mildewproofing agent simply, this invention has issued from a discovery that addition of a good solvent for the base resin of plastic or the resinous component of a coating material permits production of an antibacterial the resin composition either suffering no large degradation of the antibacterial activity of an inorganic antibacterial-mildewproofing agent itself or preferably keeping the antibacterial activity nearly intact. This knowledge has constituted itself a very important key to the completion of this invention. That is, this very knowledge has made it possible to obtain the antibacterial resinous article of this invention having an antibacterial activity. The question whether the mechanism of the manifestation of the antibacterial effect of the antibacterial plastic of this invention due to the use of the good solvent in the method for production contemplated by this invention is logically explained by a postulate that the part of the antibacterial resinous article which has used the solvent is finally completed in the form of a porous the resinous article containing numerous very fine pores, the inorganic antibacterial-mildewproofing agent so elicited in the form of points on the interior surface of the pores constitute themselves the origin of growth of the active oxygen generated by expoure with light in the presence of oxygen or water, and the effect of killing bacteria by oxidation is increased to the extent fairly comparable with the antibacterial effect of the inorganic antibacterial-mildewproofing agent itself or by a postulate that an excellent antibacterial activity is manifested at entirely unforeseeable portions by a new operation not relying on the active oxygen theory has not been given any clear solution and may well be regarded as still awaiting the outcomes of future studies.

The method of production of (1) mentioned above proves suitable where the resinous article has a surface liable to wear or the resinous article, when obtained by the method of production of (2), encounters difficulty in retaining the antibacterial activity for a long time or where the resinous article is a formed product having a very complicate shape or a large volume or containing minute (fine) irregularities in the surface, i.e. the resinous article, once formed, renders application of the method of production of (2) technically difficult or, even in the absence of such technical difficulty, economically impracticable by reason of a higher cost than the method of production of (1). The method of production of (2) mentioned above proves suitable where the resinous article is used in such disposable food containers and wrapping materials which do not expose their surface to internal or external pressure. Preferably, the plastic is manufactured by the methods of production of (1) and (2) mentioned above in a combined manner. The combined use of these two methods is suitable for the manufacture of textile products such as socks washed and used repeatedly, carpets, and bedclothes, daily necessaries such as cutting boards, household utensils, and bathroom articles, and washing machines (particularly washing tubs and extractors). In the case of textile products, for example, it is commendable to form the fibers themselves as antibacterial fibers and then forming an antibacterial coating or superposed part on the fibers or a textile product using the fibers by immersing the fibers or the textile product in a coating material containing a good solvent for the resinous component of the coating material and an inorganic antibacterial-mildewproofing agent.

Properly, the amount of the good solvent to be added in the method for production of (1) mentioned above, or the method for producing the antibacterial resin composition of the present invention is in the range of 0.05 - 1.5 wt. %, preferably in the range of 0.05 - 1.0 wt. %, based on the weight of base resin. If the amount of the good solvent to be added is less than 0.05 wt. %, based on the amount of the base resin, the shortage will be at a disadvantage in rendering it difficult to elicit the expected antibacterial activity without largely lowering the antibacterial activity which is inherently possessed by the inorganic antibacterial·mildewproofing agent. Conversely, if this amount exceeds 1.5 wt. %, the excess will be at a disadvantage in failing to bring a proportionate addition to the expected effect.

Properly, the amount of the good solvent to be incorporated in the method of production of (2) mentioned above, or the method for producing the antibacterial resin composition of the present invention is in the range of 0.05 - 1.5 wt. %, preferably in the range of 0.05 - 1.0 wt. %, based on the amount of the resinous component of the coating material. If the amount of the good solvent to be added is less than 0.05 wt. %, based on the amount of the base resin of the resin composition, the shortage will be at a disadvantage in rendering it difficult to elicit the expected antibacterial activity without largely lowering the antibacterial activity which is possessed by the inorganic antibacterial-mildewproofing agent itself. Conversely, if this amount exceeds 1.5 wt. %, the excess will be at a disadvantage in failing to bring a proportionate addition to the expected activity.

The good solvent which may be used in the method for the production of the antibacterial resin composition contemplated by this invention is preferred to be a solvent which possesses a solubility parameter (SP₂) nearly on a par with the solubility parameter (SP₁) of the base resin of resin composition or the resinous component of coating material, a solvent which has the parameters, SP₁ and SP₂, in a relation satisfying the expression, |SP₁ - SP₂| ≦ 1. The principle rule that applies hereto is that the base resin of plastic or the resinous component of coating material be selected so that the SP₁ value and the SP₂ value thereof may approximate as closely to each other as possible or may preferably equal to each other. This is because the activities of the inorganic antibacterial-mildewproofing agent incorporated in the base resin or the resinous component are lost in accordance as the difference between the SP₁ value and the SP₂ value increases. Incidentally, concerning the solubility parameter (SP₁) of the base resin (the base resin of resin composition or the resinous component of coating material) and the solubility parameter (SP₂) of the solvent, quite numerous found values (and theoretical values) have been found to date. Only part of such solubility parameters are shown in Table 1 and 2 (SP values concerning resin) and Table 3 and 4 (SP values concerning solvent) below. It should be noted, however, that the solvents applicable to the present invention do not need to be limited to those shown in the tables but may be suitably selected from among various solvents known heretofore, depending on the base resin in the resin composition or the resinous component of coating material actually used herein. The solubility parameters of base resin shown in Table 1 and 2 below cover both found values and theoretical values. Regarding the solubility parameters (SP₁) for the base resins to be used of this invention, the found values are used as a rule. Regarding the resin for which no found value has been obtained [silicone (polydimethyl siloxane) alone answers this description among the values indicated in Table 1 and 2 below], the theoretical value will used.

**[Table 1]**

| Resin | SP value | | Crystallinity | Room temperature modulus | Glass transition point (°C) |
|---|---|---|---|---|---|
| | Theoretical | Found | | | |
| Polytetrachloroethylene | 6.2 | 7.3 | High | Medium | -113 |
| Polydimethyl siloxane (silicone) | 7.3 | | Low-Medium | Medium | -123 |
| Butyl rubber | | 7.7 | Low | Low | |
| Polypropylene | 7.9 | 7.8-8.0 | High | Medium | -10 |
| Polyethylene | 8.1 | 7.9 | High | Medium | -82 |
| Hydrogenated polybutadiene | 8.1 | 8.1 | Low | Low | |
| Natural rubber | 8.15 | 7.9-8.1 | Low | Low | -72 |
| Polybutadiene/styrene (85/15) | 8.48 | 8.5 | Low | Low | |
| Polybutadiene/styrene (75/25) | 8.54 | 8.4-8.6 | Low | Low | |
| Polybutadiene/styrene (60/40) | 8.6 | 8.5-8.7 | Low | Low | |
| Polyisobutylene | | 7.8-8.0 | Low | Low | -70 |
| Polybutadiene | 8.38 | 8.4-8.6 | Low | Low | -60 |
| Polybutyl acrylate | 8.5 | 8.8 | Low | Low | |
| Polyethylene hexyl methacrylate | | 9.0 | Low | Low | |
| Polyethoxymethyl methacrylate | 9.0 | 9.0 | | | |
| Polypropyl acrylate | 9.0 | 9.0 | | | |
| Polystyrene | 9.12 | 9.1 | Medium | High | 100 |
| Polysulfide (thiokol rubber) | | 9.0-9.4 | Low | Low | |

**[Table 2]**

| Resin | SP value | | Crystallinity | Room temperature modulus | Glass transition point (°C) |
|---|---|---|---|---|---|
| | Theoretical | Found | | | |
| Polystyrene divinyl benzene | 9.1 | 9.1-9.2 | Low | High | |
| Polymethyl methacrylate | 9.25 | 9.0-9.5 | Low | High | 105 |
| Neoprene | 9.38 | 9.05 | Varied | Low | |
| Polybutadiene/acrylonitrile (75/25) | 9.25 | 9.4-9.5 | | | |
| Polyvinyl acetate | 9.4 | 9.4 | Low | Medium | 29 |
| Polyethyl acrylate | 9.7 | 9.4 | Low | Low | |
| Polyvinyl chloride | 9.6 | 9.5 | High | High | 82 |
| Polymethyl acrylate | 9.8 | 10.1 | Low | Low | |
| Epoxy resin | 9.65 | 9.7-10.9 | Low | Medium-High | |
| Polyurethane | 10.0 | 10.0 | Varied | Low | |
| Ethyl cellulose | | 10.3 | Low | Medium-High | 43 |
| Polyvinyl chloroacetate | | 10.4 | High | High | |
| Polyethylene glycol terephthalate (Tetron) | 10.7 | 10.7 | High | High | 69 |
| Cellulose diacetate | 11.3 | 10.9 | High | High | 81 |
| Cellulose dinitrate | 10.48 | 10.6-11.5 | Low-Medium | Medium | |
| Polymethyleneoxide (Derlin) | 11.2 | 11.0 | High | High | |
| Phenol resin | | 10.5-11.5 | Low | High | |
| Polyvinylidene chloride (Saran) | | 12.2 | High | Medium-High | -17 |
| Nylons | | 12.7-13.6 | High | Medium-High | 50 |
| Polymethacrylonitrile | | 15.0 | Low | Medium | 120 |
| Polyacrylonitrile | | 15.4 | High | Medium-High | 130 |

**[Table 3]**

| Solvent | Polarity | SP value | Solvent | Polarity | SP value |
|---|---|---|---|---|---|
| Methane | No | 4.7 | Dodecane | No | 7.84 |
| Ethylene | No | 5.5 | Tetradecane | No | 7.93 |
| Ethane | No | 5.65 | Hexadecane | No | 8.00 |
| 2,2-Dimethyl propane | No | 6.12 | Octadecane | No | 8.04 |
| Propylene | No | 6.11 | Eicosane | No | 8.08 |
| Propane | No | 6.2 | n-Butyl butyrate | Yes | 8.0 |
| 2-Methyl propane | No | 6.25 | Isobutyl butyrate | Yes | 8.1 |
| n-Butane | No | 6.62 | Cycloheptane | No | 8.1 |
| Butene | No | 6.7 | Cyclohexane | No | 8.18 |
| 2-Methyl propylene | No | 6.7 | Isobutyl acetate | Yes | 8.3 |
| 2-Methyl butene | No | 6.75 | n-Amyl acetate | Yes | 8.3 |
| Isopentane | No | 6.82 | Methyl isopropyl ketone | Yes | 8.4 |
| 2,2,2-4-Trimethyl pentene | No | 8.85 | n-Amyl propyl ketone | Yes | 8.4 |
| 2,2,3-Trimethyl butane | No | 6.94 | Methyl isobutyl ketone | Yes | 8.4 |
| Mineral spirit | No | 6.9 | Isopropyl benzene | No | 8.4 |
| Pentane | No | 7.02 | Carbon tetrachloride | No | 8.58 |
| Trans-2-butene | No | 7.0 | Butyl acetate | Yes | 8.5 |
| 1,3-Butadiene | No | 7.1 | Amyl benzene | No | 8.5 |
| Cis-2-butene | No | 7.2 | n-Propyl benzene | No | 8.65 |
| n-Hexane | No | 7.24 | Ethyl butyrate | Yes | 8.7 |
| Trimethyl amine | No | 7.3 | Cellosolve acetate | Yes | 8.7 |
| Heptane | No | 7.42 | n-Propyl acetate | Yes | 8.75 |
| Octane | No | 7.55 | p-Xylene | No | 8.75 |
| Isoprene | No | 7.45 | Ethyl propionate | Yes | 8.8 |
| Nonane | No | 7.65 | m-Xylene | No | 8.8 |
| Ethyl ether | Yes | 7.7 | Ethyl benzene | No | 8.8 |
| Decane | No | 7.72 | Mesithylene | No | 8.8 |
| Methyl cyclohexane | No | 7.82 | Amyl form ate | Yes | 8.8 |

**[Table 4]**

| Solvent | Polarity | SP value | Solvent | Polarity | SP value |
|---|---|---|---|---|---|
| Toluene | No | 8.91 | Diethyl phthalate | Yes | 10.05 |
| Methylprpopyl ketone | Yes | 8.9 | Dioxane | Yes | 10.1 |
| Butyl carbitol | Yes | 8.9 | 2-Nitropropane | Yes | 10.1 |
| Butyl cellosolve | Yes | 8.9 | Methyl form ate | Yes | 10.15 |
| o-Xylene | No | 9.0 | Diethyl oxalate | Yes | 10.25 |
| Chloral | Yes | 9.0 | Acetophenone | Yes | 10.35 |
| Butyral | Yes | 9.0 | Dimethyl phthalate | Yes | 10.55 |
| Ethyl acetate | Yes | 9.1 | Propion nitrile | Yes | 10.7 |
| Benzene | No | 9.15 | Pyridine | Yes | 10.8 |
| Diacetone alcohol | Yes | 9.2 | Isobutanol | Yes | 11.0 |
| Tetrahydrofuran | Yes | 9.2 | n-Butanol | Yes | 11.4 |
| Trichloroethylene | Yes | 9.3 | m-Cresol | Yes | 11.4 |
| Styrene | No | 9.3 | Isopropanol | Yes | 11.5 |
| Methylethyl ketone | Yes | 9.22 | Acetonitrile | Yes | 11.9 |
| Perchloroethylene | Yes | 9.4 | Aniline | Yes | 11.9 |
| Chloroform | Yes | 9.4 | Dimethyl formamide | Yes | 12.0 |
| Ethyl formate | Yes | 9.4 | n-Propanol | Yes | 12.1 |
| Tetralin | No | 9.5 | Ethylglycomalonate | Yes | 12.3 |
| Monochlorobenzene | Yes | 9.5 | Furfuryl alcohol | Yes | 12.5 |
| Tetrachloroethane | Yes | 9.5 | Acetic acid | Yes | 12.6 |
| Isoamyl alcohol | Yes | 9.6 | Nitromethane | Yes | 12.7 |
| Methyl acetate | Yes | 9.6 | Ethanol | Yes | 12.7 |
| Methylene chloride | Yes | 9.7 | Formic acid | Yes | 13.5 |
| Ethylene chloride | Yes | 9.7 | Ethylene glycol | Yes | 14.2 |
| Cellosolve | Yes | 9.9 | Methanol | Yes | 14.8 |
| Dimethyl benzoate | Yes | 9.9 | Phenol | Yes | 14.5 |
| Acetone | Yes | 9.8 | Water | Yes | 23.4 |
| Ethylene bromide | Yes | 10.0 | | | |

The additives which may be used for the method of production of (1) above, the resin composition or the resinous article of the present invention other than the inorganic antibacterial-mildewproofing agent do not need to be particularly discriminated but may be properly selected from among various additives heretofore known as usable for incorporation in the antibacterial resin composition ore the resinous article. A proper dispersant, when necessary for the purpose of uniformly dispersing the inorganic antibacterial-mildewproofing agent, may be suitably incorporated in a proper proportion. Likewise, the additives which can be used for the method of production of (2) above other than the inorganic antibacterial·mildewproofing agent may be properly selected from among various additives heretofore known as usable for incorporation in the antibacterial resin composition or the antibacterial resinous article, similarly to the additives usable for the method of production of (1) mentioned above and so on. In this case, the formation of the resinous article itself has no particular use for any solvent. It suffices instead to select suitably the solvent which becomes necessary in the formation of the antibacterial coating or superposed part at least on the surface part of resinous article.

The antibacterial resinous article and the method for production thereof according to this invention tolerate the environment (light, water etc.) existing during the application of heat and pressure for processing and during the actual use, avoid greatly impairing the basic properties of resinous article, effectively elicit the antibacterial activity inherently possessed by the inorganic antibacterial-mildewproofing agent as a simple substance without markedly impairing the effect, preclude an operation of substituting such an expensive antibacterial metal as silver for a conventional expensive carrier, allow use of an inorganic type antibacterial-mildewproofing agent provided inexpensively by a simple procedure of only subjecting a natural mineral raw material supplied at a very low price to a calcining treatment, require no adoption of a complicate processing treatment of any sort as compared with the conventional method, only require to add a procedure of simply incorporating a good solvent for the base resin or resinous component in a prescribed ratio, allow the manufacture to be attained relatively inexpensively, ensure manufacture in virtually all forms (various forms like fibers, films, coatings, and formed articles etc.) similarly in the conventional method, afford finished products of extremely high safety (safety at all the stages including processing, actual use, and discarding), and enable the antibacterial effect relative to staphylococcus and 0-157 bacterium emitting toxin as a possible cause for food poisoning to be retained at a very high level. Thus, they can be extensively used particularly in food wraps, containers, cutting boards, kitchen utensils, and refrigerators and in daily necessaries for toilet rooms and bathrooms which are prone to secondary infection as well. Thus, the inorganic antibacterial·mildewproofing agents and the antibacterial resinous articles contemplated by this invention can be utilized in numerous fields. This invention, therefore, enjoys a striking feature of offering antibacterial resinous articles usable in all the end products such as, for example, daily household necessaries like food wraps, food containers, cutting boards, kitchen utensils, and articles used in bathrooms, electric products like refrigerators, washing machines, portable terminals (telephone sets), water purifying devices, and air conditioners, household interior materials like wall paper and floorings, building materials like ceiling materials, textile products like socks, carpets, and bedclothes, construction machines, agricultural materials, and industrial articles which require antibacterial properties. These end products enjoy lasting protection against degradation and discoloration by bacteria and mildews and loss of commercial value.

### EXPERIMENTS

Now, this invention will be described specifically below by reference to preferred embodiments of the invention cited herein below. It should be noted, however, that this invention does not need to be limited to the examples disclosed herein below but may be embodied in various modes. These working examples are offered purely for the purpose of perfecting disclosure and enabling persons of ordinary skill in the art to comprehend the purview of this invention. The invention may be variously altered and modified within the scope of the technical idea of this invention by persons of ordinary skill in the art. Needless to mention, these alterations and modifications belong to the technical scope of this invention.

### (Example 1)

The percentage compositions of the seven species, A - G, of inorganic antibacterial-mildewproofing agent used in Example 1 are shown in Table 5 below. The seven species, A - G, of inorganic antibacterial-mildewproofing agent mentioned above were manufactured by formulating the raw materials shown in Table 5 and adjusting the resultant blends to a particle diameter of not more than 10 µm.

**[Table 5]**

| Percentage composition of inorganic antibacterial·mildew proofing agent (wt. %) | | | | | | |
|---|---|---|---|---|---|---|
| Sample | MgO | SiO₂ | ZnO | TiO₂ | Calcined dolomite B | Calcined dolomite A |
| A | 50 | 10 | 7.5 | 7.5 | 25 | - |
| B | 25 | - | 7.5 | 7.5 | 50 | 10 |
| C | - | 15 | 10 | - | 50 | - |
| D | - - | 25 | - - | 10 | 50 | 15 |
| E | 50 | - | - | 10 | 25 | 15 |
| F | - | - | - | - | 100 | - |
| G | - - | - - | - - | - - | - - | 100 |

The properties of the seven species, A - G, of inorganic antibacterial·mildewproofing agent as simple substances shown in Table 4 above are shown in Table 6 below.

**[Table 6]**

| | Properties of inorganic antibacterial·mildew proofing agent | | | | | | | |
|---|---|---|---|---|---|---|---|---|
| Sample | pH | Surface area (m²/g) | Emissivity (%) | Mildew resistivity (%) | Deodorizing ratio (%) | | Antibacterial activity (%) | |
| | | | | | Acid | Alkaline | E.Coli | Staphylococcus |
| A | 8.5 | 10.5 | 92.0 | 96.0 | 98.5 | 99.0 | 99.5 | 99.7 |
| B | 9.0 | 10.0 | 93.0 | 97.0 | 97.8 | 98.7 | 99.0 | 99.5 |
| C | 8.8 | 9.5 | 93.0 | 98.0 | 98.5 | 98.0 | 98.8 | 99.8 |
| D | 9.1 | 9.3 | 92.0 | 98.0 | 99.0 | 99.0 | 99.3 | 99.5 |
| E | 9.1 | 9.2 | 94.0 | 97.0 | 98.0 | 98.5 | 99.5 | 99.7 |
| F | 9.2 | 9.1 | 92.0 | 95.0 | 99.0 | 98.0 | 99.8 | 99.6 |
| G | 9.2 | 9.1 | 93.0 | 96.0 | 99.0 | 98.0 | 99.7 | 99.7 |

The antibacterial activity s relative to Escherichia coli and staphylococcus shown in Table 6 above represent the values which were determined by the shake method described above and calculated accordingly. The data of the mildews resistivity, emissivity, surface area, and pH besides the value of the deodorizing ratio relative to an acidic substance(acid) and an alkaline substance (alkaline) which form sources for generation of odor represent the values determined by the relevant methods shown below and computed accordingly. In the present example, hydrogen sulfide was used as the acidic substance and ammonia as the alkaline substance.
(1) Deodorizing ratio: Determined by the six-step method.
(2) Mildews resistivity: Determined by the method specified in JIS Z2911.
(3) Emissivity: Determined by analyzing a sample with a spectrometer.
   The concrete operation is that emissivity of a piece of virtual black body in the length of 30 mm, in the wide of 20 mm and in the thick of 2 mm and the sample was compared with using spectrometer manufactured by Japan spectrometer Industry Co. Ltd,. at the surface temperature of the sample of 100 °C
(4) Surface area: Measured by using the BET (Brunauer-Emmett-Teller) method.
(5) pH: Determined by the use of a pH meter.

### Examples 1 - 10

Processed products of antibacterial resinous article were obtained by selecting those species shown in Table 8 from among the seven species, A - G, of inorganic antibacterial-mildewproofing agent having the properties shown in Table 6 and processing the selected species by the mixing method which, at the time that the species were added in respectively specified ratios (falling in the range of 5 - 10 wt. %, based on the base resin) to four different species of base resin of resin composition (polyethylene, polystyrene, polyurethane, and nylon), diluted master batches having an inorganic antibacterial-mildewproofing agent incorporated therein in high concentrations with a varying good solvent for the base resin [solvents having solubility parameters (SP₂) equal to the solubility parameters (SP₁) of the weight of base resins shown in Table 6 below] in stated ratios (falling in the range of 0.5 - 1.0 wt. %, based on the weight of the base resin) shown in Table 7 below. The test pieces taken from the species of produced antibacterial resinous articles were tested for various properties. The results of the test are shown in Table 8 below. Of the data of the determinations performed by the methods described above, those of the antibacterial activity s relative to Escherichia coli and staphylococcus were determined by the pressure method and calculated accordingly and those of the deodorizing ratio, mildews resistivity, emissivity, surface area, and pH were determined by the relevant methods described above.

**[Table 7]**

| Base resin | | Solvent | |
|---|---|---|---|
| Kind | SP₁ | Kind | SP₂ |
| Polyethylene | 8.1 | Isobutyl butyrate | 8.1 |
| Polystyrene | 9.1 | Ethyl acetate | 9.1 |
| Polyurethane | 10.0 | Ethylene bromide | 10.0 |
| Nylon | 12.7-13.6 | Ethanol | 12.7 |

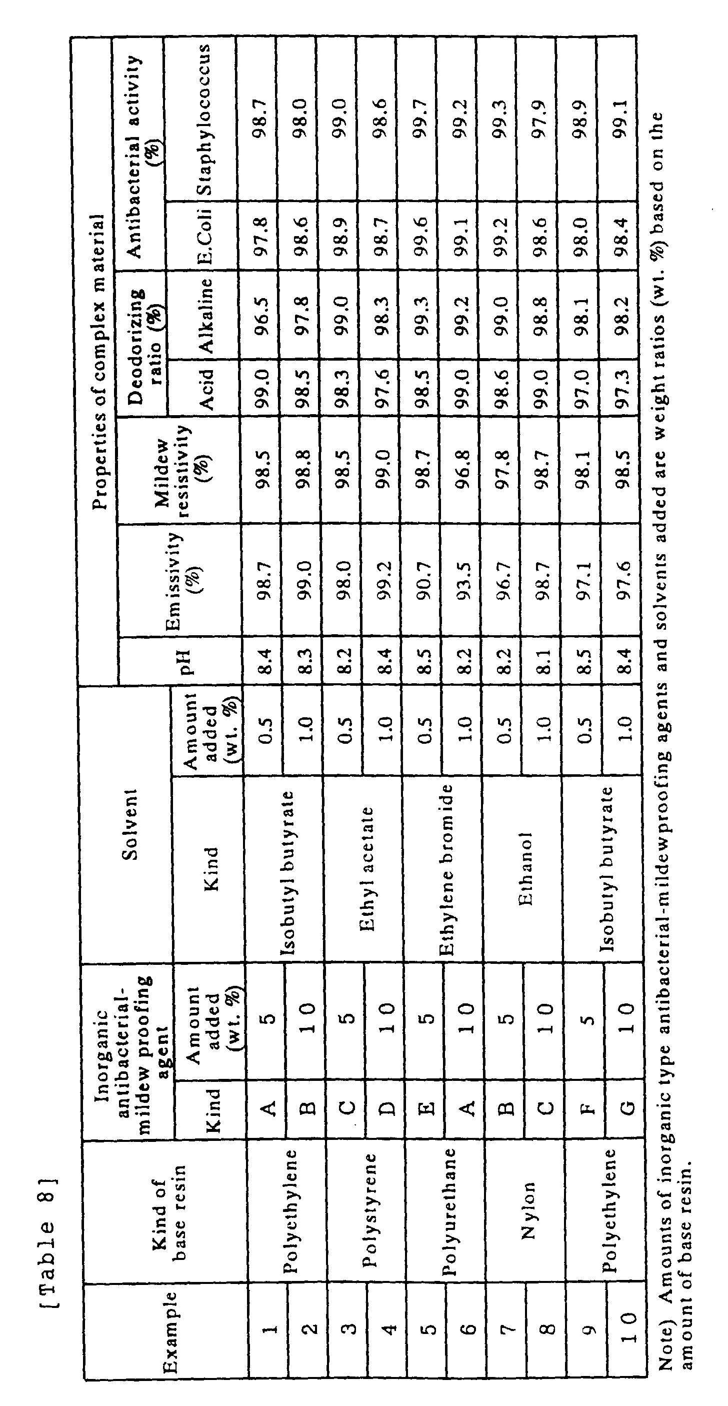

It is clearly noted from Table 7 and Table 8 that all the antibacterial resinous articles obtained in Examples 1 - 10 were invariably confirmed to have retained practically intact the various activities (antibacterial activity, deodorizing ratio, mildews resistivity, and emissivity) including the antibacterial activity possessed by the relevant species of inorganic antibacterial-mildewproofing agent incorporated in the resinous article. Particularly regarding the antibacterial activities, the correlation functions of the antibacterial activity (X) of the inorganic antibacterial-mildewproofing agent as a simple substance and the antibacterial activity (Y) of the resinous article formed by using the inorganic antibacterial-mildewproofing agent satisfied Y ≧ 0.6X and also invariably satisfied Y ≧ 0.9X. Likewise, the antibacterial resinous articles were confirmed to have retained nearly intact the properties, i.e. deodorizing ratio, mildews resistivity, and emissivity, possessed inherently by the inorganic antibacterial-mildewproofing agent as a simple substance.

### Controls 1 - 10

Formed antibacterial resinous article were obtained by selecting those species shown in Table 9 from among the seven species, A - G, of inorganic antibacterial-mildewproofing agent having the properties shown in Table 4 and adding the selected species in respectively prescribed ratios (falling in the range of 5 - 10 wt. %, based on the base resin) to the four different species of base resin of resin composition (polyethylene, polystyrene, polyurethane, and nylon) by the method of diluting master batches having an inorganic antibacterial-mildewproofing agent incorporated therein in high concentrations. The test pieces taken from the species of produced antibacterial resinous article were tested for various properties. The results of the test are shown in Table 9 below. The properties were determined by the same methods as used for determining the properties of the inorganic antibacterial-mildewproofing agent mentioned above.

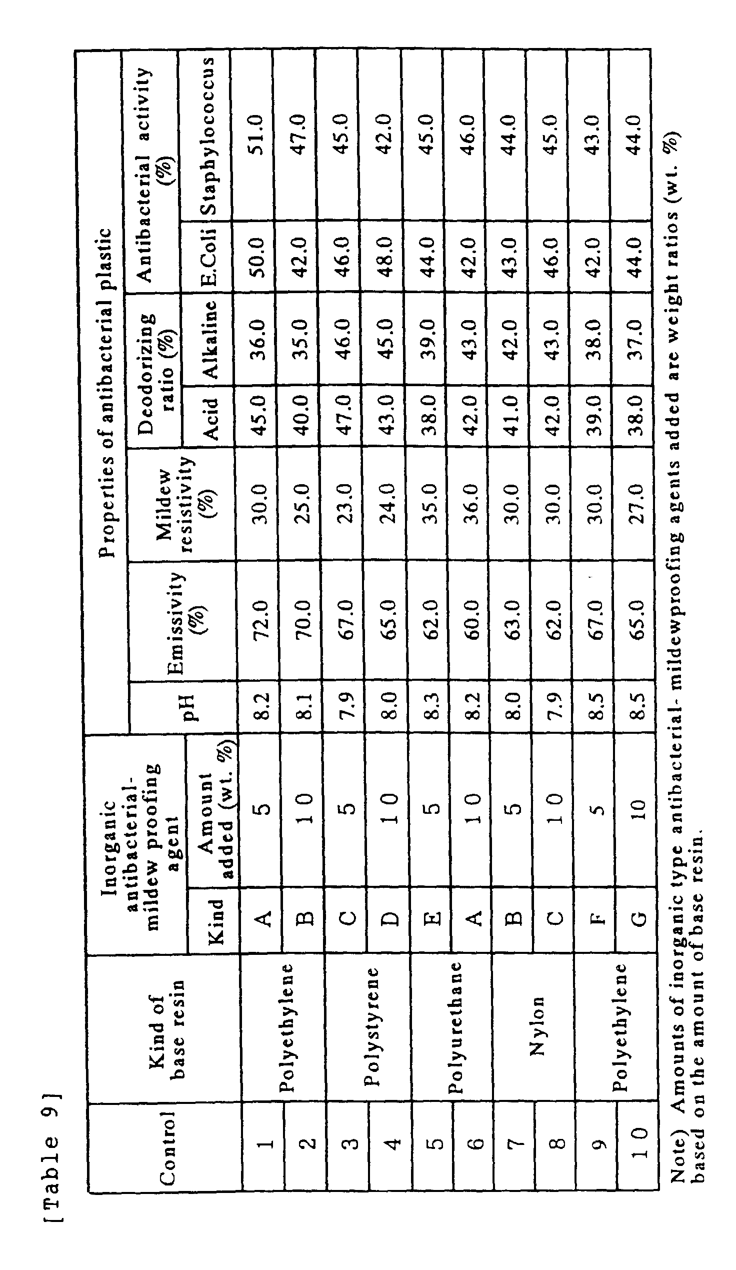

It is clearly noted from Table 9 that the antibacterial resinous articles obtained in Controls 1 - 10 could not retain the antibacterial properties possessed by the varying species of inorganic antibacterial-mildewproofing agent incorporated in the plastics and suffered marked declines of such properties. In the antibacterial plastics, the antibacterial activity (X) of the inorganic antibacterial-mildewproofing agent as a simple substance and the antibacterial activity (Y) of the plastic formed by using the inorganic antibacterial-mildewproofing agent had correlation functions which did not satisfy Y ≧ 0.6X. As respects the deodorizing ratio, mildews resistivity, and emissivity, the antibacterial plastics did not retain intact the properties possessed by the inorganic antibacterial-mildewproofing agents and suffered marked declines thereof. The results described above demonstrate that the selection of a good solvent for the base resin, specifically a solvent having a solubility parameter (SP₂) practically on a par with the solubility parameter (SP₁) of the base resin, constitutes itself an important key to the production of an antibacterial resinous article.

## Claims

1. An inorganic antibacterial-mildewproofing agent comprising calcined dolomite.

2. The agent according to claim 1, wherein an antibacterial activity (X) of said agent is not less than 85% for Escherichia coli and staphylococcus.

3. A antibacterial resin composition comprising the inorganic autibacterial-mildewproofing agent according to claim 1 and a good solvent for the base resin, wherein the amount of the inorganic antibacterial-mildewproofing agent to be incorporated is in the range of 2.5 to 20 % by weight based on the weight of the base resin and the amount of the good solvent to be incorporated is in the range of 0.05 to 1.5 % by weight based on the weight of the base resin.

4. The composition according to claim 3, wherein the calcined dolomite is a dolomite calcined at the temperature in the range of 900 to 1200 °C.

5. The composition according to claim 3, wherein the particle diameter of said inorganic antibacterial-mildewproofing agent is in the range of 1 nm to 15 µm.

6. The composition according to claim 3, wherein the good solvent is a solvent having a solubility parameter (SP₂) substantially equal to the solubility parameter (SP₁) of the base resin.

7. The composition according to claim 3, wherein the relation of said SP₁ to said SP₂ satisfies |SP₁ = SP₂ | ≦ 1.

8. A antibacterial resinous article comprising the inorganic antibacterial-mildewproofing agent according to claim 1 in the range of 2.5 to 20 % by veight based on the weight of the base resin, wherein the relation of an antibacterial activity (X) of said inorganic antibacterial-mildewproofing agent to an antibacterial activity (Y) of said antibacterial resin article satisfies Y ≧ 0.6 X.

9. The article according to claim 8, wherein the particle size of the inorganic antibacterial-mildewproofing agent to be incorporated is in the range of 1 nm to 15 µ m.

10. The article according to claim 8, wherein the relation of an antibacterial activity (X) of said inorganic antibacterial-mildewproofing agent and an antibacterial activity (Y) of said antibacterial resin article satisfies Y ≧ 0.9 X.
